# EUROPÄISCHE PATENTSCHRIFT

(11) **EP 2 496 428 B1**
(45) Veröffentlichungstag und Bekanntmachung des Hinweises auf die Patenterteilung: **26.02.2014**
(21) Anmeldenummer: 10795955.3
(22) Anmeldetag: 02.11.2010
(51) Int. Cl.: B60J 5/04

(54) **STRUKTURRAHMENMODUL FÜR EINE FAHRZEUGTÜR**
STRUCTURAL FRAME MODULE FOR A VEHICLE DOOR
MODULE DE CADRE DE STRUCTURE POUR UNE PORTE DE VÉHICULE

(30) Priorität: 03.11.2009 DE 102009046343
(43) Veröffentlichungstag der Anmeldung: 12.09.2012
(73) Patentinhaber: Brose Fahrzeugteile GmbH & Co. KG, Hallstadt, 96103 Hallstadt (DE)
(72) Erfinder: THIENEL, Michael, 95349 Thurnau (DE)
(74) Vertreter: Schröder, Christoph
(86) Internationale Anmeldenummer: PCT/EP2010/066654
(87) Internationale Veröffentlichungsnummer: WO 2011/054826

(56) Entgegenhaltungen:
- EP-A2- 1 457 372
- WO-A1-2005/024165
- DE-A1- 4 306 290
- DE-C1- 3 921 289

## Beschreibung

Die Erfindung betrifft ein Strukturrahmenmodul für eine Fahrzeugtür nach dem Oberbegriff des Anspruchs 1.

Ein derartiges Strukturrahmenmodul weist einen mindestens eine Querstrebe aufweisenden Strukturrahmen, eine Fensterhebereinheit, die an dem Strukturrahmen angeordnet ist, und Abstütz- oder Anbindungsstellen, von denen zumindest ein Teil an dem Strukturrahmen angeordnet ist, zur Verbindung des Strukturrahmenmoduls mit einer Türinnenverkleidung auf.

Bei einer aus der DE 39 21 289 C1 bekannten Kraftfahrzeugtür, die über Scharniergelenke mit einer Fahrzeugzelle verbunden ist und einen gitterartigen, eine Fensterhebevorrichtung tragenden Tragrahmen aufweist, ist der Tragrahmen in die Kraftfahrzeugtür einsetzbar, wobei zumindest ein Träger des Tragrahmens an seinen Verbindungsstellen mit in der Kraftfahrzeugtür angeordneten Krafteinleitungsstellen verbunden ist. Die Krafteinleitungsstellen stehen in kraftschlüssigem Kontakt mit beidseitig an die Kraftfahrzeugtür angrenzenden Säulen der Fahrzeugzelle. Der Tragrahmen weist eine Querstrebe auf, die zusammen mit der Fensterhebevorrichtung an der Fahrzeugtür montiert wird. Zur Komplettierung der Kraftfahrzeugtür wird dann an einer dem Fahrzeuginnenraum zugewandten Seite des Tragrahmens eine Türinnenverkleidung befestigt.

Bei einer aus der DE 43 06 290 A1 bekannten Fahrzeugtür in Rahmenbauweise ist ein tragender, ein Türtragemodul bildender Türrahmen mit einem umlaufenden Rahmen vorgesehen, der einen Fensterheber zum Bewegen einer Fensterscheibe sowie Türelemente und Bauteile zur Führung der Fensterscheibe aufweist.

Fahrzeugtüren in Rahmenbauweise werden insbesondere an Kleinwagen verwendet, um Fahrzeugtüren mit geringem Gewicht bei niedrigen Kosten zur Verfügung zu stellen. Bei Fahrzeugtüren in Rahmenbauweise wird dabei herkömmlich ein umlaufender Rahmen verwendet, an den einerseits eine Türaußenhaut und andererseits eine Türinnenverkleidung zur Komplettierung der Fahrzeugtür angesetzt werden. Der umlaufende Rahmen dient insbesondere zur Anbindung und Abstützung der Innenverkleidung und muss ausgelegt sein, einen auf die Innenverkleidung bei geschlossener Fahrzeugtür wirkenden Dichtungsdruck aufzunehmen und zu übertragen.

Durch Verwendung eines geschlossenen, umlaufenden Rahmens erhöhen sich jedoch das Gewicht der Fahrzeugtür und auch die Kosten, bedingt durch die Anzahl der erforderlichen Rahmenteile.

Die EP 1 457 372 A2 offenbart eine Fahrzeugtür, bei der ein Paneel durch eine Querstrebe und an der Querstrebe angeordnete, nach unten von der Querstrebe vorstehende Streben gebildet ist. Die Strebe dient hierbei dazu, ein Schloss zu tragen, während die Strebe zum Halten einer Führungsschiene eines Fensterhebers dient.

Aufgabe der vorliegenden Erfindung ist es, ein Strukturrahmenmodul für eine Fahrzeugtür zu schaffen, das bei niedrigem Gewicht und niedrigen Kosten hinreichend stabil ausgebildet und insbesondere geeignet ist, eine Türinnenverkleidung so abzustützen, dass ein auf die Türinnenverkleidung wirkender Dichtungsdruck übertragen werden kann.

Diese Aufgabe wird durch einen Gegenstand mit den Merkmalen des Anspruchs 1 gelöst.

Dabei ist bei einem Strukturrahmenmodul der eingangs genannten Art mindestens eine Strebe vorgesehen, die mit der mindestens einen Querstrebe des Strukturrahmens verbunden ist und die ein von der Querstrebe vorstehendes freies Ende aufweist, an dem eine Abstütz- oder Anbindungsstelle für die Türinnenverkleidung angeordnet ist.

Die vorliegende Erfindung geht von dem Gedanken aus, zum Zwecke der Gewichtsersparnis einen umlaufenden Rahmen eines Strukturrahmenmoduls für eine Fahrzeugtür aufzubrechen und solche Abschnitte des umlaufenden Rahmens wegzulassen, die nicht unbedingt erforderlich sind. Um dennoch eine hinreichende Abstützung einer zu befestigenden Türinnenverkleidung zu gewährleisten, sieht das Strukturrahmenmodul mindestens eine Strebe vor, die sich beispielsweise vertikal zur Querstrebe des Strukturrahmenmoduls erstrecken kann und an einem. unteren freien Ende eine oder mehrere Abstütz- oder Anbindungsstellen für die Türinnenverkleidung vorsieht. Die Abstützung der Türinnenverkleidung erfolgt damit nicht mehr über einen umlaufenden Rahmen, sondern zumindest teilweise über eine an dem Strukturrahmen angeordnete zusätzliche Strebe.

Der Strukturrahmen kann insbesondere in Form einer Gitterstruktur mit einer oder mehreren Querstreben und mit einer oder mehreren daran angeordneten Streben ausgebildet sein, wobei die Querstreben und Streben dadurch, dass sich die Erstreckungsrichtung der Querstreben und die Erstreckungsrichtung der Streben unterscheiden, eine Gitterstruktur ausbilden.

Unter Abstützstellen sind hier solche Stellen zu verstehen, die zur Abstützung der Türinnenverkleidung ausgelegt sind, dabei jedoch keine feste Verbindung mit der Türinnenverkleidung vorsehen. Die Abstützung erfolgt beispielsweise über eine abstützende Anlage, jedoch ohne feste Verbindung.

Unter Anbindungsstellen sind solche Befestigungsstellen zu verstehen, die eine feste Verbindung mit der Türinnenverkleidung vorsehen, beispielsweise über eine Schraubverbindung, eine Nietverbindung oder eine rastende Clipsverbindung.

In einer vorteilhaften Ausgestaltung ist die mindestens eine Strebe Bestandteil der Fensterhebereinheit, die an dem Strukturrahmen angeordnet ist. Die Fensterhebereinheit kann hierbei beispielsweise zwei im Wesentlichen parallel zueinander verlaufende Streben aufweisen. Dadurch, dass die Streben Teil der Fensterhebereinheit sind, indem die Streben beispielsweise in eine Trägerplatte der Fensterhebereinheit integriert sind, übernimmt die Fensterhebereinheit eine abstützende Funktion zur Abstützung oder Anbindung der Türinnenverkleidung und ist hierzu, durch Vorsehen der Streben, hinreichend formstabil ausgebildet.

Die Fensterhebereinheit kann beispielsweise als Seilfensterheber ausgebildet sein, bei dem eine Verstellkraft über ein Zugmittel in Form eines Seils auf eine entlang Führungsschienen geführte Fensterscheibe übertragen wird. Grundsätzlich sind in diesem Zusammenhang aber auch beliebige andere Bauformen von Fensterhebern denkbar.

Die Formstabilität der Fensterhebereinheit wird insbesondere durch das Vorsehen einer oder mehrerer Streben erreicht. Vorteilhafterweise ist hierzu jede Strebe derartig steif ausgebildet, dass sie von einer Türinnenverkleidung eingeleitete Kräfte aufnehmen und in geeigneter Weise übertragen kann. Insbesondere kann die Strebe aus einem beispielsweise räumlich strukturierten Metallblech, einem beispielsweise mittels Stranggießen, Strangpressen oder Strangziehen hergestellten Leichtmetallgussteil, beispielsweise einem Aluminiumgussteil, oder aus einem faserverstärkten Kunststoff, insbesondere einem glasfaserverstärkten Kunststoff, gefertigt sein.

In einer Ausführungsform kann die mindestens eine Strebe zusammen mit einer sich flächig erstreckenden Trägerplatte der Fensterhebereinheit eine Metall-Kunststoff-Hybridbaugruppe ausbilden, bei der die Trägerplatte aus einem Kunststoffmaterial, beispielsweise einem faserverstärktem Kunststoff, hergestellt ist und mindestens eine Führungsschiene der Fensterhebereinheit trägt. Die Formstabilität der Baugruppe wird dabei vorwiegend durch die aus Metall gefertigten Streben bereitgestellt, die fest mit der Trägerplatte verbunden, beispielsweise durch Umspritzen in die Trägerplatte eingebettet sind und damit eine Einheit mit der Trägerplatte bilden.

Um die mindestens eine Strebe hinreichend formstabil auszubilden, kann sie im Querschnitt im Wesentlichen U-förmig als Hohlprofil gestaltet sein, wobei zur weiteren Erhöhung der Stabilität Versteifungsrippen innerhalb des U-förmigen Hohlprofils vorgesehen sind. Die Versteifungsrippen können aus Kunststoff gefertigt sein und in das Hohlprofil der z.B. aus Metall hergestellten Strebe bei der integralen Fertigung der Trägerplatten-Streben-Einheit eingeformt, beispielsweise eingespritzt werden. Die Versteifungsrippen können in vorteilhafter Weise kreuzweise zueinander verlaufen, so dass sich eine Rippenstruktur hoher Formstabilität mit geringem Gewicht ergibt.

Die mindestens eine Strebe kann unmittelbar - oder gegebenenfalls auch mittelbar über die Trägerplatte der Fensterhebereinheit - an einer Brüstungsstrebe und einem Seitenaufprallträger des Strukturrahmenmoduls angeordnet sein. Die Brüstungsstrebe und der Seitenaufprallträger bilden hierbei jeweils eine Querstrebe aus und verlaufen, in ihrer bestimmungsgemäßen Position, im Wesentlichen horizontal in Fahrzeuglängsrichtung. Die mindestens eine Strebe kann fest oder in Fahrzeugquerrichtung verstellbar an die Brüstungsstrebe und/oder den Seitenaufprallträger angebunden sein, wobei sich im ersten Fall eine besonders stabile Anbindung ergibt und im zweiten Fall eine Verstellung in Fahrzeugquerrichtung ermöglicht wird, die insbesondere bei einer rahmenlosen Fahrzeugtür eine Justage der Abzugslinie einer Fensterscheibe ermöglicht.

Die mindestens eine Strebe kann einen oder mehrere von der Strebe abzweigende Arme aufweisen, die jeweils über ein freies Ende mit einer Abstütz- oder Anbindungsstelle für die Türinnenverkleidung verfügen. Durch das Vorsehen der Arme wird eine verzweigte Strebenstruktur geschaffen, die Abstütz- oder Anbindungsstellen für die Türinnenverkleidung an voneinander beabstandeten Orten bereitstellen kann und die entstehenden Kräfte über die hinreichend steifen Streben in den Strukturrahmen mit seinen Querstreben einleitet.

Zur weiteren Erhöhung der Stabilität kann jeder Arm über einen Quersteg mit dem freien Ende der zugeordneten Strebe verbunden sein, wobei der Quersteg einstückig an den Arm und die Strebe angeformt ist und, entsprechend dem Material der Strebe und des Arms, aus Metall oder Kunststoff gefertigt ist. Ist die Strebe aus Metall, beispielsweise als U-förmiges Hohlprofil, gefertigt, sind auch der mit der Strebe verbundene, von der Strebe abzweigende Arm und der den Arm und die Strebe verbindende Quersteg aus Metall einstückig mit der Strebe gefertigt.

Über die Abstütz- oder Anbindungsstellen an den freien Enden der Streben und der Arme wird eine Türinnenverkleidung bei montierter Fahrzeugtür abgestützt. Die Abstütz- oder Anbindungsstellen können hierbei zum Einstellen der Lage der Türinnenverkleidung relativ zu dem Strukturrahmenmodul Mittel beispielsweise in Form einer Einstellschraube, eines Einstellexzenters oder eines an der mindestens einen Strebe verschiebbar und rastbar gelagerten Schiebers vorsehen, die ein Verstellen der Türinnenverkleidung relativ zu den Abstütz- oder Anbindungsstellen in Fahrzeugquerrichtung ermöglichen und gleichzeitig eine Abstützung für die Türinnenverkleidung bereitstellen. Eine Einstellschraube kann beispielsweise in Fahrzeugquerrichtung relativ zu den Abstütz- oder Anbindungsstellen verschraubt werden. Ein Einstellexzenter kann exzentrisch verdreht werden, so dass sich eine Einstellung in Fahrzeugquerrichtung ergibt. Ein in Fahrzeugquerrichtung verschiebbar gelagerter Schieber kann derart verschoben werden, dass die Lage der Türinnenverkleidung in Fahrzeugquerrichtung verstellt wird, wobei der Schieber über eine Rastverbindung rastend an den Abstütz- oder Anbindungsstellen gehalten wird und beispielsweise eine Verstellung - nach Art eines von Bowdenzügen bekannten Seillängenausgleichs - nur in eine Richtung ermöglicht.

In weiterer vorteilhafter Ausgestaltung bildet die Fensterhebereinheit einen Modulträger aus oder ist Bestandteil eines Moduls, das mindestens eines der nachstehend aufgeführten Bauteile trägt:
- eine Antriebsvorrichtung für die Fensterhebereinheit,
- Umlenkelemente für ein Zugmittel der Fensterhebereinheit,
- ein Seilantriebsgehäuse für die als Seilfenster ausgebildete Fensterhebereinheit,
- Kabelclipse,
- eine Schnittstelle für einen Türzuziehgriff,
- einen Lautsprecher,
- einen Schlosshalter und/oder
- Abstütz- oder Anbindungsstellen für eine Türaußenhaut.

Die Fensterhebereinheit stellt auf diese Weise ein integriertes Modul für unterschiedliche Funktionskomponenten der Fahrzeugtür zur Verfügung oder ist Bestandteil von einem solchen Modul, das als eigenständiges Modul mit dem Strukturrahmen des Strukturrahmenmoduls verbunden werden kann. Diese modulare Bauweise vereinfacht die Montage des Strukturrahmenmoduls.

Die Fensterhebereinheit kann als außenliegender Fensterheber derart ausgebildet sein, dass eine von der Fensterhebereinheit zu verstellende Fensterscheibe an einer zum Fahrzeuginnenraum hin weisenden Seite der Fensterhebereinheit geführt ist. In Abkehr von heutzutage überwiegend verwendeten Anordnungen, bei denen eine Fensterscheibe an einer zur Türaußenhaut hin gerichteten Seite einer Fensterhebereinheit geführt ist, ergibt sich mit der Ausbildung der Fensterhebereinheit als außenliegender Fensterheber eine Bauteilreihenfolge (in Fahrzeugquerrichtung gesehen von außen nach innen) Türaußenhaut - Fensterhebereinheit - Fensterscheibe - Türinnenverkleidung, so dass die Fensterscheibe in einem Zwischenraum zwischen der Trägerplatte der Fensterhebereinheit und der Türinnenverkleidung geführt ist.

Der der Erfindung zugrunde liegende Gedanke soll nachfolgend anhand der in den Figuren dargestellten Ausführungsbeispiele näher erläutert werden. Es zeigen:
- Fig. 1: eine perspektivische Ansicht eines Strukturrahmenmoduls mit einem Strukturrahmen und einer Fensterhebereinheit, montiert an einer Türinnenverkleidung;
- Fig. 2A: eine Ansicht des Strukturrahmenmoduls gemäß Fig. 1, jedoch ohne Türinnenverkleidung, von außen;
- Fig. 2B: eine Ansicht des Strukturrahmenmoduls gemäß Fig. 1, jedoch ohne Türinnenverkleidung, von innen;
- Fig. 3A: eine Ansicht des Strukturrahmens des Strukturrahmenmoduls von außen;
- Fig. 3B: eine Ansicht des Strukturrahmens des Strukturrahmenmoduls von innen;
- Fig. 4A: eine Ansicht der Fensterhebereinheit des Strukturrahmenmoduls von außen;
- Fig. 4B: eine Ansicht der Fensterhebereinheit des Strukturrahmenmoduls von innen;
- Fig. 5: eine Ansicht des Strukturrahmens in seiner Lagebeziehung zu Streben der Fensterhebereinheit;
- Fig. 6: eine gesonderte Ansicht der Streben der Fensterhebereinheit;
- Fig. 7A: eine Ansicht der Türinnenverkleidung gemäß Fig. 1 von außen;
- Fig. 7B: eine Ansicht der Türinnenverkleidung gemäß Fig. 1 von innen und
- Fig. 8: eine Ansicht eines Strukturrahmenmoduls nach dem Stand der Technik.

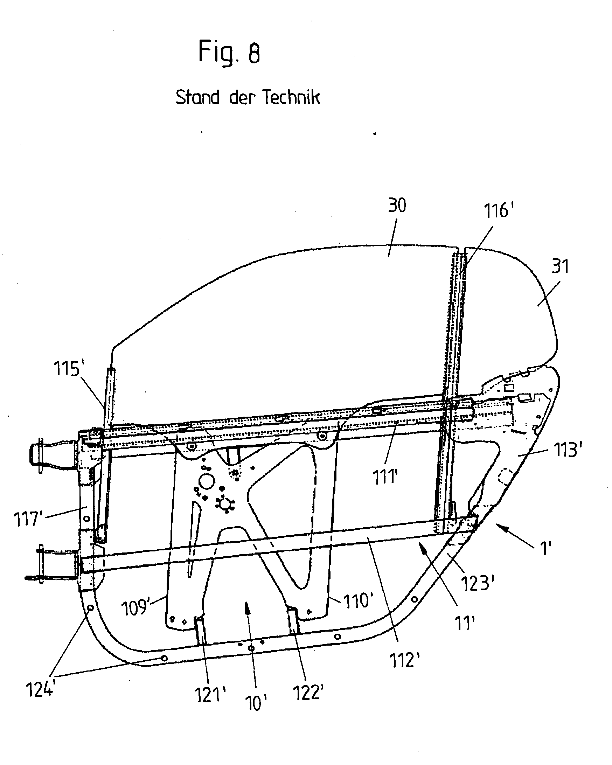

Fig. 8 zeigt ein Strukturrahmenmodul 1' für eine Fahrzeugtür in Rahmenbauweise, das außenseitig (d.h. an seiner vom Fahrzeuginnenraum weg weisenden Seite, entsprechend der in Fig. 8 vorne liegenden Seite) mit einer Türaußenhaut und innenseitig (d.h. an seiner dem Fahrzeuginnenraum zugewandeten Seite, entsprechend der in Fig. 8 hinten liegenden Seite) mit einer Türinnenverkleidung zur Komplettierung der Fahrzeugtür zu verbinden ist.

Das Strukturrahmenmodul 1' gemäß Fig. 8 ist mit einem umlaufend geschlossenen Strukturrahmen 11' ausgebildet mit Querstreben in Form einer Brüstungsstrebe 111' und eines Seitenaufprallträgers 112', mit einem Schlossblech 113' zur Anbindung eines Türschlosses, mit einem Scharnierträger 117' zur Anbindung eines Scharniers zur gelenkigen Verbindung der Fahrzeugtür mit der Fahrzeugkarosserie eines Fahrzeugs und mit einem unteren Rahmenteil 123', der den Strukturrahmen 11' nach unten hin umfänglich schließt. Mit dem Strukturrahmen 11' ist eine Fensterhebereinheit 10' verbunden, die beispielsweise als Seilfensterheber ausgebildet ist und über einstellbare Adapter 121', 122' an unteren Enden zweier Führungsschienen 109', 110' mit dem unteren Rahmenteil 123' verstellbar verbunden ist.

Der Scharnierträger 117' und das untere Rahmenteil 123' sind hierbei in der Regel einstückig als ein Teil ausgebildet.

Die Fensterhebereinheit 10' dient zum Verstellen einer an seitlichen Scheibenführungselementen 115', 116' geführten Fensterscheibe 30. Die Scheibenführungselemente 115', 116' sind mit dem Strukturrahmen 11' fest verbunden, wobei das in Fahrzeuglängsrichtung gesehen hintere Scheibenführungselement 116' zusätzlich eine hintere, nicht verstellbare Fensterscheibe 31 abstützt.

An dem unteren Rahmenteil 123' sind Befestigungsstellen 124' zur Anbindung einer Türinnenverkleidung vorgesehen. Das untere Rahmenteil 123' dient damit insbesondere der Abstützung der Türinnenverkleidung und ist ausgebildet, von der Türinnenverkleidung eingeleitete Kräfte in geeigneter Weise aufzunehmen und in den Strukturrahmen 11' einzuleiten. Hierbei ist erforderlich, dass die Türinnenverkleidung in einer Weise abgestützt wird, dass eine zwischen Fahrzeugkarosserie und Türinnenverkleidung wirkende Dichtung bei geschlossener Fahrzeugtür mit einem ausreichenden Dichtungsdruck beaufschlagt wird, um eine hinreichende Dichtigkeit der Fahrzeugtür in geschlossenem Zustand zu gewährleisten.

Durch die Ausbildung des Strukturrahmens 11' des Strukturrahmenmoduls 1' als umfänglich geschlossener Rahmen ergibt sich ein Modul mit hoher Stabilität, jedoch auch vergleichsweise großem Gewicht.

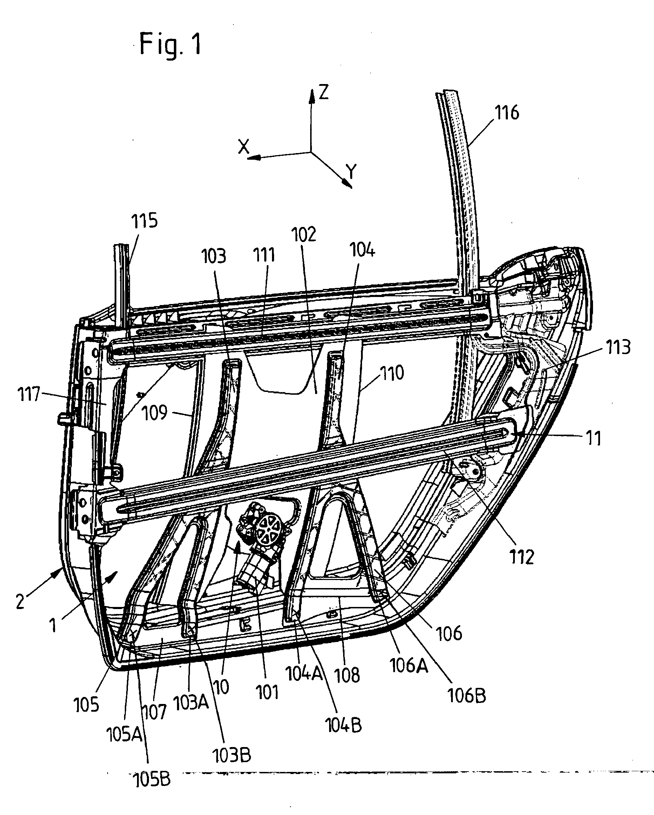

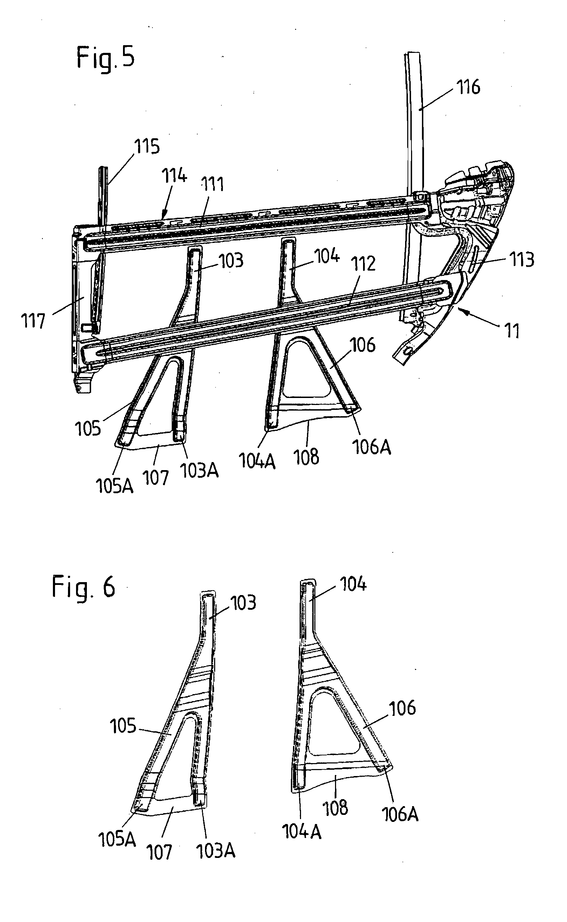

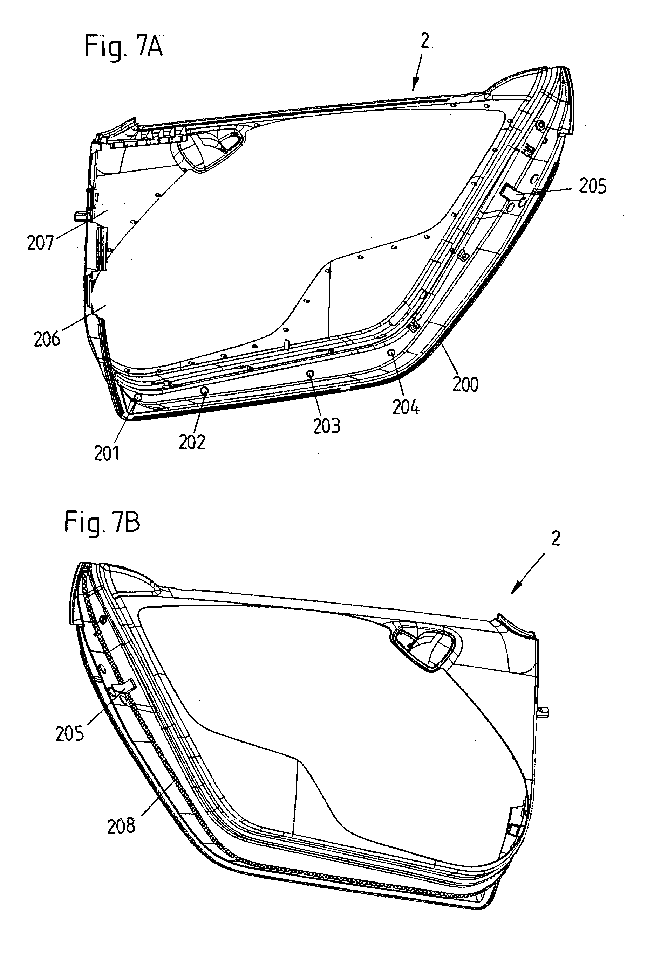

In Abkehr von dem in Fig. 8 dargestellten Strukturrahmenmodul 1' wird bei einem die vorliegende Erfindung verwirklichenden Strukturrahmenmodul 1, das in Fig. 1 bis 6 mit seinen Bauteilen in unterschiedlichen Ansichten dargestellt ist, ein Strukturrahmen 11 verwendet, der umfänglich nicht mehr geschlossen ist und auf ein unteres umfängliches Rahmenteil verzichtet. Das Strukturrahmenmodul 1 ist im montierten Zustand mit einer Türinnenverkleidung 2 verbunden, die in Fig. 7A und 7B in gesonderten Ansichten gezeigt ist.

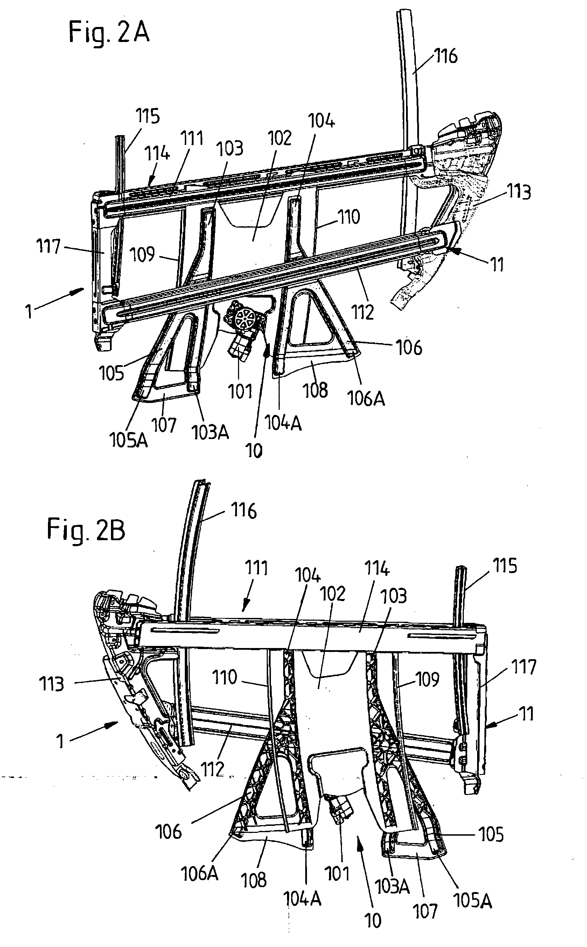

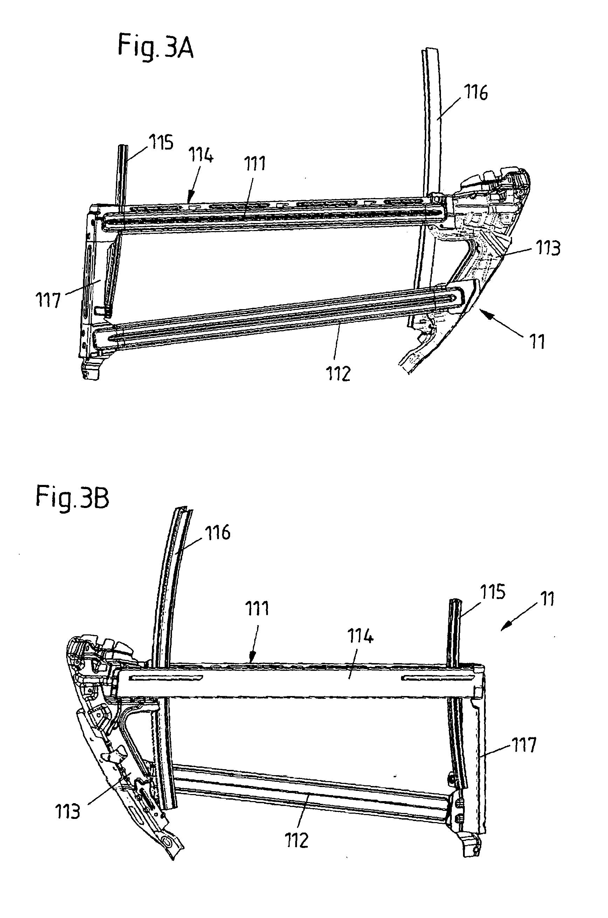

Das Strukturrahmenmodul 1, dargestellt in Fig. 1 zusammen mit einer Türinnenverkleidung 2 und in Fig. 2A und 2B in gesonderten Ansichten von außen (Fig. 2A) und von innen (Fig. 2B), weist einen Seitenaufprallträger 112 und eine innere Brüstungsstrebe 114 sowie eine äußere Brüstungsstrebe 111 auf, die seitlich über ein Schlossblech 113 zur Anbindung eines Türschlosses einerseits und über einen Scharnierträger 117 zur Anbringung eines Türscharniers andererseits zur Ausbildung des Strukturrahmens 11 miteinander verbunden sind (siehe Fig. 3A in einer Ansicht von außen und Fig. 3B in einer Ansicht von innen). Der Seitenaufprallträger 112 und die innere und äußere Brüstungsstrebe 111, 114 sowie das Schlossblech 113 und der Scharnierträger 117 sind jeweils aus einem Metallblech hergestellt und bilden den gitterförmigen Strukturrahmen 11, mit dem weiterhin seitliche Scheibenführungselemente 115, 116 zur Führung einer Fensterscheibe an dem Strukturrahmen 11 verbunden sind.

Alternativ können der Seitenaufprallträger 112 und die innere und äußere Brüstungsstrebe 111, 114 sowie das Schlossblech 113 und der Scharnierträger 117 auch als Profilteile aus einem Leichtmetall, beispielsweise Aluminium, oder als strukturierte Kunststoffprofilteile ausgebildet sein.

Mit dem Strukturrahmen 11 ist eine Fensterhebereinheit 10 verbunden, die als Seilfensterheber ausgebildet ist und neben einer Antriebsvorrichtung 101 weitere Komponenten zur Übertragung einer Verstellkraft auf eine entlang von Führungsschienen 109, 110 seitlich an einer Trägerplatte 102 geführte Fensterscheibe aufweist (zum Beispiel ein Zugmittel, eine Umlenkung, ein Seilantriebsgehäuse, Mitnehmer und dergleichen, die in den dargestellten Ansichten der Übersichtlichkeit halber nicht im Einzelnen eingezeichnet sind).

Die Trägerplatte 102 der Fensterhebereinheit ist aus Kunststoff beispielsweise als Kunststoffspritzteil gefertigt und weist beispielsweise durch Umspritzen eingebettete Streben 103, 104 und von den Streben 103, 104 abzweigenden Arme 105, 106 auf, die aus Metall hergestellt sind. Die Trägerplatte 102 der Fensterhebereinheit 10 bildet auf diese Weise zusammen mit den Streben 103, 104 und den Armen 105, 106 eine Metall-Kunststoff-Hybridbaugruppe aus, die einerseits ein vergleichsweise kleines Gewicht, andererseits aber eine hohe Steifigkeit insbesondere in Fahrzeugquerrichtung Y aufweist.

Wie insbesondere aus den Ansichten des Strukturrahmenmoduls 1 in Fig. 2A und 2B ersichtlich, ist der durch das Strukturrahmenmodul 1 geschaffene Rahmen der Fahrzeugtür umfänglich nicht geschlossen. Um dennoch eine hinreichend formstabile Abstützung für eine Türinnenverkleidung 2 (siehe Fig. 1) zu schaffen, übernimmt bei dem Strukturrahmenmodul 1 die Fensterhebereinheit 10 eine tragende Funktion und weist dazu die in die Trägerplatte 102 eingebetteten Streben 103, 104 mit den Armen 105, 106 auf, die an ihren nach unten von dem Seitenaufprallträger 112 vorstehenden freien Enden 103A, 104A, 105A, 106A Abstütz- oder Anbindungsstellen 103B, 104B, 105B, 106B zur (losen) Abstützung oder zur (festen) Anbindung der Türinnenverkleidung 2 vorsehen.

Die Streben 103, 104 und die Arme 105, 106, die von den Streben 103, 104 abzweigen, sind hinreichend formstabil ausgebildet, um die Türinnenverkleidung 2 abzustützen und insbesondere einen hinreichenden Dichtungsdruck für eine dichtende Anlage der Türinnenverkleidung 2 an einem zugeordneten Fahrzeugkarosserieabschnitt zur Abdichtung der Fahrzeugtür gegenüber der Fahrzeugkarosserie zu gewährleisten. Eine Dichtung ist hierbei vorteilhafterweise an der Fahrzeugkarosserie vorgesehen und liegt bei geschlossener Fahrzeugtür an einem Dichtungsabschnitt 208 der Türinnenverkleidung 2 (vgl. Fig. 7B) an. Denkbar ist aber auch, eine Dichtung an der Türinnenverkleidung vorzusehen.

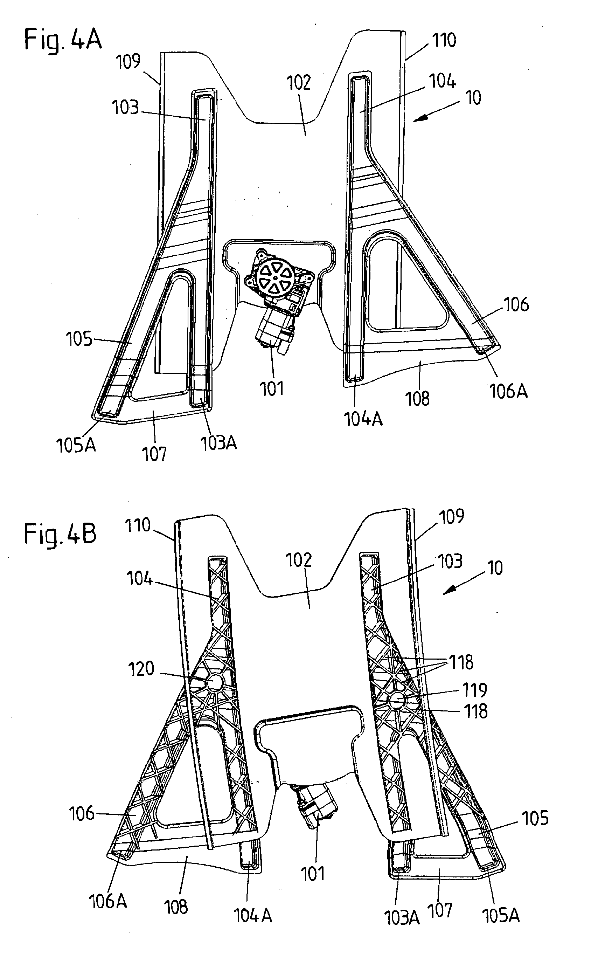

Die Streben 103, 104 und die Arme 105, 106 sind hierzu als im Querschnitt im Wesentlichen U-förmig ausgebildete Hohlprofile aus einem Metallblech oder als Leichtmetallgussteile beispielsweise mittels Stranggießen, Strangpressen oder Strangziehen z.B. aus Aluminium gefertigt und durch Umspritzen, wie beispielsweise in Fig. 4A und 4B dargestellt, integral mit der Trägerplatte 102 verbunden. Die Streben 103, 104 sind dabei nahezu vollständig in die Trägerplatte 102 eingebettet, während die Arme 105, 106 zumindest abschnittsweise die Trägerplatte 102 überragen.

Zur weiteren Versteifung der Hohlprofile sind in die Hohlprofile, wie aus Fig. 4B ersichtlich, Versteifungsrippen 118 aus Kunststoff eingeformt, die eine gitterartige Rippenstruktur bilden und die Festigkeit und Steifigkeit der Streben 103, 104 und Arme 105, 106 erhöhen, ohne deren Gewicht nennenswert zu vergrößern. Die Versteifungsrippen 118 können beispielsweise in die Hohlprofile der Streben 103, 104 und Arme 105, 106 eingespritzt sein.

Die Abstütz- oder Anbindungsstellen 103B, 104B, 105B, 106B sind an den freien Enden 103A, 104A, 105A, 106A der Streben 103, 104 und Arme 105, 106 angeordnet. Die freien Enden 103A, 104A, 105A, 106A der Streben 103, 104 und Arme 1045, 106 sind über Querstege 107, 108 miteinander verbunden, die aus demselben Material wie die Streben 103, 104 und die Arme 105, 106 einstückig mit den Streben 103, 104 und den Armen 105, 106 gefertigt sind.

An den Querstegen 107, 108 können weitere Abschnitts- oder Anbindungsstellen zur Abstützung der Türinnenverkleidung angeordnet sein.

Als Abstützstellen werden in diesem Zusammenhang solche Stellen bezeichnet, die zur Abstützung der Türinnenverkleidung 2 insbesondere in Fahrzeugquerrichtung Y dienen, ohne eine feste Verbindung mit der Türinnenverkleidung 2 herzustellen. Die Abstützung kann beispielsweise über eine lose Anlage oder auch eine Anlage unter Vorspannung erreicht werden.

Als Anbindungsstellen werden solche Stellen bezeichnet, die eine feste Verbindung der Streben 103, 104 und Arme 105, 106 mit der Türinnenverkleidung 2 herstellen, beispielsweise über eine Schraubverbindung, eine Nietverbindung oder eine Rastverbindung.

Dadurch, dass die Fensterhebereinheit 10 mit ihren Streben 103, 104 und Armen 105, 106 eine tragende Funktion zur Abstützung der Türinnenverkleidung 2 übernimmt, kann auf ein unteres, umfängliches Rahmenteil verzichtet werden. In ihrem unteren Bereich wird damit die Türinnenverkleidung 2 nicht über den Strukturrahmen 10, sondern über die Streben 103, 104 und Arme 105, 106 der Fensterhebereinheit 10 abgestützt. Auf diese Weise kann das Gewicht des Strukturrahmenmoduls 1 im Vergleich zu herkömmlichen Strukturrahmenmodulen reduziert werden, ohne die Stabilität und Steifigkeit des Strukturrahmenmoduls 1 zu beeinträchtigen, wobei gleichzeitig durch die verringerte Anzahl an Bauteilen die Kosten des Strukturrahmenmoduls 1 reduziert sind.

Die Fensterhebereinheit 10 ist über Befestigungsstellen 119, 120, die im Verbindungsbereich der Streben 103, 104 mit den Armen 105, 106 angeordnet sind (siehe Fig. 4B), mit dem Seitenaufprallträger 112 verbunden. Weiterhin ist die Fensterhebereinheit 110 an der äußeren Brüstungsstrebe 111 befestigt und wird so am Strukturrahmen 11 gehalten. Wie aus Fig. 1 und Fig. 2A ersichtlich, ist die Fensterhebereinheit 10 zwischen der inneren Brüstungsstrebe 114 und der äußeren Brüstungsstrebe 111 angeordnet, dabei aber lediglich mit der äußeren Brüstungsstrebe 111 verbunden.

Die Verbindung der Fensterhebereinheit 10 mit dem Seitenaufprallträger 112 und der äußeren Brüstungsstrebe 111 kann fest ausgebildet sein, beispielsweise über eine Schraub- oder Nietverbindung. Eine solche Ausgestaltung mit fester Verbindung ist insbesondere für rahmengeführte Fensterscheiben denkbar und vorteilhaft, bei denen eine Justage der Abzugslinie der Fensterscheibe nicht erforderlich ist.

Ist die Fahrzeugtür als rahmenlose Fahrzeugtür ausgebildet, bei der die Fensterscheibe nicht in einem Fensterrahmen seitlich an ihren Kanten geführt ist, so ist in der Regel eine Feineinstellung der Abzugslinie der Fensterscheibe in Fahrzeugquerrichtung Y erforderlich. Hierzu kann die Verbindung der Fensterhebereinheit 10 mit dem Seitenaufprallträger 112 und/oder der äußeren Brüstungsstrebe 111 verstellbar ausgebildet sein, beispielsweise durch Vorsehen einer Einstellschraube, eines Exzenters oder eines Verstellschiebers, so dass die Fensterhebereinheit 10 in ihrer Lage in Fahrzeugquerrichtung Y relativ zu dem Seitenaufprallträger 112 und der äußeren Brüstungsstrebe 111 angepasst werden kann.

Die Fensterhebereinheit 110 ist als außenliegender Fensterheber ausgebildet derart, dass eine zu verstellende Fensterscheibe an einer dem Fahrzeuginnenraum zugewandten Seite der Fensterhebereinheit 10 geführt wird. Dies erfolgt über an seitlichen Kanten ausgebildete Führungsschienen 109, 110 an der dem Fahrzeuginnenraum zugewandten Seite (entsprechend der in Fig. 2B vorderen Seite) der Trägerplatte 102 der Fensterhebereinheit 10. Es ergibt sich damit bei montierter Fahrzeugtür eine Anordnung, bei der die Fensterscheibe zwischen der Trägerplatte 102 und der Türinnenverkleidung 2 angeordnet ist und nicht, wie herkömmlich generell üblich, zwischen Fensterhebereinheit 10 und einer Türaußenhaut. Die Fensterscheibe wird dann in montiertem Zustand der Fahrzeugtür durch die innere Brüstungsstrebe 111 und die äußere Brüstungsstrebe 114 hindurchgeführt und durch seitlichen Umgriff an den Führungselementen 115, 116 gehalten.

An der Fensterhebereinheit 10 können weitere Funktionskomponenten der Fahrzeugtür angeordnet sein, beispielsweise weitere Komponenten des Fensterhebers, wie Umlenkungen, Mitnehmer, ein Zugmittel, ein Seilantriebsgehäuse oder dergleichen, oder auch weitere Funktionskomponenten der Fahrzeugtür, wie ein Lautsprecher, ein Türzuziehgriff oder dergleichen. Die Fensterhebereinheit 10 kann damit ein integriertes Modul bereitstellen, das eine einfache Montage der Fahrzeugtür auf modulare Weise ermöglicht.

Fig. 7A und 7B zeigen gesonderte Ansichten der Türinnenverkleidung 2 gesehen von außen (Fig. 7A), d.h. von der Seite aus, an der die Türaußenhaut zu befestigen ist, und von innen (Fig. 7B), d.h. vom Fahrzeuginnenraum her. Die Türinnenverkleidung 2 weist Aussparungen 205, 206, 207 zum Durchgriff für ein Türschloss und ein Türscharnier auf, und im unteren Bereich der Türinnenverkleidung 2 sind an der der Türaußenhaut zugewandten Seite (siehe Fig. 7A) Befestigungsstellen 201, 202, 203, 204 zur Verbindung mit den Abstütz- oder Anbindungsstellen 103B, 104B, 105B, 106B der Streben 103, 104 und Arme 105, 106 (siehe Fig. 1) vorgesehen.

Die Befestigungsstellen 201, 202, 203, 204 können zur lediglich stützenden, losen Verbindung (im Sinne von Abstützstellen) oder zur festen Verbindung (im Sinne von Anbindungsstellen) ausgebildet sein.

Denkbar ist auch, über die in Fig. 7A dargestellten Befestigungsstellen 201, 202, 203, 204 hinaus weitere Befestigungsstellen vorzusehen, die beispielsweise zur Verbindung mit den Querstegen 107, 108 des Strukturrahmenmoduls 1 dienen.

Die Türinnenverkleidung 2 weist einen (zur Anlage mit einer Dichtung der Fahrzeugkarosserie ausgebildeten) Dichtungsabschnitt 208 (schraffiert dargestellt in Fig. 7B) an ihrer zum Fahrzeuginnenraum hin gewandten Seite auf, die zur dichtenden Anlage der Türinnenverkleidung 2 an der Dichtung der Fahrzeugkarosserie mit einem hinreichend großen Dichtungsdruck zu beaufschlagen ist, der durch Abstützung der Türinnenverkleidung 2 über die Streben 103, 104 und Arme 105, 106 gewährleistet ist.

Die Fahrzeugtür wird komplettiert durch Verbinden der Türinnenverkleidung 2, wie in Fig. 1 dargestellt, mit dem Strukturrahmenmodul 1 und durch Anbringen einer Türaußenhaut an dem Strukturrahmenmodul 1 an seiner von der Türinnenverkleidung 2 abgewandten Seite.

Mit dem beschriebenen Strukturrahmenmodul 1 wird eine leichtgewichtige und kostengünstige Fahrzeugtür in Rahmenbauweise insbesondere zur Verwendung an Kleinwagen geschaffen, die sich durch hohe Stabilität und Festigkeit auszeichnet, bei gegebenenfalls sogar verbesserter Abstützung der Türinnenverkleidung 2.

Der der Erfindung zugrunde liegende Gedanke ist nicht auf die vorangehend geschilderten Ausführungsbeispiele beschränkt, sondern lässt sich auch bei gänzlich anders gearteten Ausführungsformen verwirklichen. Insbesondere ist die vorgestellte Erfindung mit beliebigen Arten von Fensterhebern zu verwirklichen und in gleichem Maße einsetzbar für Fahrzeugtüren mit an einem Fensterrahmen geführten Fensterscheiben oder rahmenlos geführten Fensterscheiben.

Die der Abstützung dienenden Streben können grundsätzlich aus einem beliebigen Material (beispielsweise auch aus einem faserverstärkten Kunststoff, insbesondere einem glasfaserverstärkten Kunststoff) hergestellt sein, wobei aber durch Materialwahl und Formgebung eine hinreichende Formstabilität der Streben zur Abstützung der Türinnenverkleidung zu gewährleisten ist.

### Bezugszeichenliste

- 1; 1': Strukturrahmenmodul
- 10; 10': Fensterhebereinheit
- 11; 11': Strukturrahmen
- 101: Antriebsvorrichtung
- 102: Trägerplatte
- 103, 104: Strebe
- 103A, 104A: Freies Ende
- 103B, 104B: Abstütz- oder Anbindungsstelle
- 105, 106: Arme
- 105A, 106A: Freies Ende
- 105B, 106B: Abstütz- oder Anbindungsstelle
- 107, 108: Quersteg
- 109, 110; 109', 110': Führungsschiene
- 111; 111': Äußere Brüstungsstrebe
- 112; 112': Seitenaufprallträger
- 113; 113': Schlossblech
- 114: Innere Brüstungsstrebe
- 115, 116; 115', 116': Scheibenführungselement
- 117; 117': Scharnierträger
- 118: Versteifungsrippen
- 119, 120: Befestigungsstelle
- 121', 122': Adapter
- 123': Unteres Rahmenteil
- 124': Befestigungsstellen
- 2: Türinnenverkleidung
- 200: Verbindungslinie
- 201, 202, 203, 204: Befestigungsstelle
- 205, 206, 207: Aussparung
- 208: Dichtungsabschnitt
- 30, 31: Fensterscheibe
- X: Fahrzeuglängsrichtung
- Y: Fahrzeugquerrichtung
- Z: Fahrzeugvertikalrichtung

## Patentansprüche

1. Strukturrahmenmodul für eine Fahrzeugtür, mit
- einem mindestens eine Querstrebe aufweisenden Strukturrahmen,
- einer Fensterhebereinheit, die an dem Strukturrahmen angeordnet ist, und
- Abstütz- oder Anbindungsstellen zur Verbindung des Strukturrahmenmoduls mit einer Türinnenverkleidung,
**gekennzeichnet durch**
mindestens eine Strebe (103,104), die mit der mindestens einen Querstrebe (111, 112, 114) des Strukturrahmens (11) verbunden ist und die ein von der Querstrebe (111, 112, 114) vorstehendes freies Ende (103A, 104A) aufweist, an dem eine Abstütz- oder Anbindungsstelle (103B, 104B) für die Türinnenverkleidung (2) angeordnet ist.

2. Strukturrahmenmodul nach Anspruch 1, **dadurch gekennzeichnet, dass** sich die Erstreckungsrichtung der mindestens einen Strebe (103,104) von der Erstreckungsrichtung der mindestens einen Querstrebe (111, 112, 114) unterscheidet.

3. Strukturrahmenmodul nach Anspruch 2, **dadurch gekennzeichnet, dass** die mindestens eine Strebe (103,104) sich im Wesentlichen senkrecht zu der mindestens einen Querstrebe (111, 112, 114) erstreckt.

4. Strukturrahmenmodul nach einem der Ansprüche 1 bis 3, **dadurch gekennzeichnet, dass** die mindestens eine Strebe (103, 104) Bestandteil der Fensterhebereinheit (10) ist.

5. Strukturrahmenmodul nach Anspruch 4, **dadurch gekennzeichnet, dass** die Fensterhebereinheit (10) zwei Streben (103, 104) aufweist.

6. Strukturrahmenmodul nach einem der vorangehenden Ansprüche, **dadurch gekennzeichnet, dass** die mindestens eine Strebe (103, 104) aus
- einem Metallblech, insbesondere einem räumlich strukturierten Metallblech,
- einem Leichtmetallgussteil, insbesondere hergestellt mittels Stranggießen, Strangpressen oder Strangziehen, oder
- einem faserverstärkten Kunststoff, insbesondere einem glasfaserverstärkten Kunststoff
gefertigt ist.

7. Strukturrahmenmodul nach einem der vorangehenden Ansprüche, **dadurch gekennzeichnet, dass** die mindestens eine Strebe (103, 104) zusammen mit einer sich flächig erstreckenden Trägerplatte (102) der Fensterhebereinheit (10) eine Metall-Kunststoff-Hybridbaugruppe ausbildet, wobei die Trägerplatte (102) aus einem Kunststoff hergestellt ist und an der Trägerplatte (102) mindestens eine Führungsschiene (109, 110) der Fensterhebereinheit (10) ausgebildet ist.

8. Strukturrahmenmodul nach einem der vorangehenden Ansprüche, **dadurch gekennzeichnet, dass** die mindestens eine Strebe (103, 104) als im Querschnitt im Wesentlichen U-förmiges Hohlprofil ausgebildet ist, das zur Erhöhung der Stabilität mit Versteifungsrippen (118) versehen ist.

9. Strukturrahmenmodul nach einem der vorangehenden Ansprüche, **dadurch gekennzeichnet, dass** die mindestens eine Strebe (103, 104) unmittelbar, oder mittelbar über die Fensterhebereinheit (10), an einer Brüstungsstrebe (111) und einem Seitenaufprallträger (112), die jeweils eine Querstrebe des Strukturrahmens (11) ausbilden, fest oder in Fahrzeugquerrichtung (Y) verstellbar angebunden ist.

10. Strukturrahmenmodul nach einem der vorangehenden Ansprüche, **dadurch gekennzeichnet, dass** die mindestens eine Strebe (103, 104) mindestens einen von der mindestens einen Strebe (103, 104) abzweigenden Arm (105, 106) aufweist, wobei der mindestens eine Arm (105, 106) ein freies Ende (105A, 106A) aufweist, an dem eine Abstütz- oder Anbindungsstelle (105B, 106B) für die Türinnenverkleidung (2) angeordnet ist.

11. Strukturrahmenmodul nach Anspruch 10, **dadurch gekennzeichnet, dass** das freie Ende (105A, 106A) des mindestens einen Arms (105, 106) über einen Quersteg (107, 108) mit dem freien Ende (103A, 104A) der mindestens einen Strebe (103, 104) verbunden ist.

12. Strukturrahmenmodul nach Anspruch 11, **dadurch gekennzeichnet, dass** der Quersteg (107, 108) einstückig an den Arm (105, 106) und die Strebe (103, 104) angeformt ist und aus Metall oder Kunststoff, insbesondere einem glasfaserverstärkten Kunststoff, gefertigt ist.

13. Strukturrahmenmodul nach einem der vorangehenden Ansprüche, **dadurch gekennzeichnet, dass** an der Abstütz- oder Anbindungsstelle (103B, 104B) der mindestens einen Strebe (103, 104) Mittel zum Einstellen der Türinnenverkleidung (2) in Fahrzeugquerrichtung (Y) angeordnet sind.

14. Strukturrahmenmodul nach einem der vorangehenden Ansprüche, **dadurch gekennzeichnet, dass** die Fensterhebereinheit (10) einen Modulträger ausbildet oder Bestandteil eines Moduls ist, das mindestens eines der nachstehend aufgeführten Bauteile trägt:
- eine Antriebsvorrichtung (101) für die Fensterhebereinheit (10),
- Umlenkelemente für ein Zugmittel der Fensterhebereinheit (10),
- ein Seilantriebsgehäuse,
- Kabelclipse,
- eine Schnittstelle für einen Türzuziehgriff,
- einen Lautsprecher,
- einen Schlosshalter und/oder
- Abstütz- oder Anbindungsstellen für eine Türaußenhaut.

15. Strukturrahmenmodul nach einem der vorangehenden Ansprüche, **dadurch gekennzeichnet, dass** die Fensterhebereinheit (10) als außenliegender Fensterheber derart ausgebildet ist, dass eine von der Fensterhebereinheit (10) zu verstellende Fensterscheibe (30) an einer zu einem Fahrzeuginnenraum hin weisenden Seite der Fensterhebereinheit (10) geführt ist.

## Claims

1. A structural frame module for a vehicle door, comprising
- a structural frame including at least one transverse strut,
- a window lifter unit which is arranged at the structural frame, and
- support or connection points for the connection of the structural frame module with an interior door trim,
**characterized by**
at least one strut (103, 104) which is connected with the at least one transverse strut (111, 112, 114) of the structural frame (11) and which has a free end (103A, 104A) protruding from the transverse strut (111, 112, 114), on which a support or connection point (103B, 104B) of the interior door trim (2) is arranged.

2. The structural frame module according to claim 1, **characterized in that** the direction of extension of the at least one strut (103, 104) differs from the direction of extension of the at least one transverse strut (111, 112, 114).

3. The structural frame module according to claim 2, **characterized in that** the at least one strut (103, 104) extends substantially vertically to the at least one transverse strut (111, 112, 114).

4. The structural frame module according to any of claims 1 to 3, **characterized in that** the at least one strut (103, 104) is part of the window lifter unit (10).

5. The structural frame module according to claim 4, **characterized in that** the window lifter unit (10) includes two struts (103, 104).

6. The structural frame module according to any of the preceding claims, **characterized in that** the at least one strut (103, 104) is fabricated of
- a metal sheet, in particular a spatially structured metal sheet,
- a light-metal casting, in particular manufactured by means of continuous casting, extrusion molding or pultrusion, or
- a fiber-reinforced plastic material, in particular a glass-fiber-reinforced plastic material.

7. The structural frame module according to any of the preceding claims, **characterized in that** the at least one strut (103, 104) together with a two-dimensionally extending carrier plate (102) of the window lifter unit (10) forms a metal-plastics hybrid assembly, wherein the carrier plate (102) is made of a plastic material and on the carrier plate (102) at least one guide rail (109, 110) of the window lifter unit (10) is formed.

8. The structural frame module according to any of the preceding claims, **characterized in that** the at least one strut (103, 104) is formed as hollow section substantially U-shaped in cross-section, which for increasing the stability is provided with stiffening ribs (118).

9. The structural frame module according to any of the preceding claims, **characterized in that** the at least one strut (103, 104) is directly, or indirectly via the window lifter unit (10), connected to a parapet strut (111) and a side impact carrier (112), which each form a transverse strut of the structural frame (11), firmly or adjustable in transverse vehicle direction (Y).

10. The structural frame module according to any of the preceding claims, **characterized in that** the at least one strut (103, 104) has at least one arm (105, 106) branching off from the at least one strut (103, 104), wherein the at least one arm (105, 106) has a free end (105A, 106A) at which a support or connection point (105B, 106B) for the interior door trim (2) is arranged.

11. The structural frame module according to claim 10, **characterized in that** the free end (105A, 106A) of the at least one arm (105, 106) is connected with the free end (103A, 104A) of the at least one strut (103, 104) via a crossbar (107, 108).

12. The structural frame module according to claim 11, **characterized in that** the crossbar (107, 108) is integrally molded to the arm (105, 106) and the strut (103, 104) and is fabricated of metal or plastics, in particular of a glass-fiber-reinforced plastic material.

13. The structural frame module according to any of the preceding claims, **characterized in that** at the support or connection point (103B, 104B) of the at least one strut (103, 104) means for adjusting the interior door trim (2) are arranged in transverse vehicle direction (Y).

14. The structural frame module according to any of the preceding claims, **characterized in that** the window lifter unit (10) forms a module carrier or is part of a module which carries at least one of the components listed below:
- a driving device (101) for the window lifter unit (10),
- redirecting elements for a pulling means of the window lifter unit (10),
- a cable drive housing,
- cable clips,
- an interface for a door closing handle,
- a loudspeaker,
- a lock holder and/or
- support or connection points for a door outer skin.

15. The structural frame module according to any of the preceding claims, **characterized in that** the window lifter unit (10) is formed as external window lifter such that a window pane (30) to be adjusted by the window lifter unit (10) is guided on a side of the window lifter unit (10) facing a vehicle interior space.

## Revendications

1. Module d'encadrement structurel pour une porte de véhicule, comprenant
- un cadre structurel muni d'au moins une entretoise transversale,
- une unité lève-vitre disposée sur ledit cadre structurel, et
- des zones d'appui ou de rattachement, destinées à relier ledit module de cadre structurel à un habillage intérieur de ladite porte,
**caractérisé par**
au moins une pièce d'entretoisement (103, 104) qui est reliée à ladite au moins une entretoise transversale (111, 112, 114) sur le cadre structurel (11), et qui comporte une extrémité libre (103A, 104A) faisant saillie au-delà de ladite entretoise transversale (111, 112, 114), et sur laquelle se trouve une zone d'appui ou de rattachement (103B, 104B) dédiée à l'habillage intérieur (2) de la porte.

2. Module d'encadrement structurel selon la revendication 1, **caractérisé par le fait que** la direction de l'étendue de ladite au moins une pièce d'entretoisement (103, 104) se différencie de la direction de l'étendue de ladite au moins une entretoise transversale (111, 112, 114).

3. Module d'encadrement structurel selon la revendication 2, **caractérisé par le fait que** ladite au moins une pièce d'entretoisement (103, 104) s'étend, pour l'essentiel, perpendiculairement à ladite au moins une entretoise transversale (111, 112, 114).

4. Module d'encadrement structurel selon l'une des revendications 1 à 3, **caractérisé par le fait que** ladite au moins une pièce d'entretoisement (103, 104) fait partie intégrante de l'unité lève-vitre (10).

5. Module d'encadrement structurel selon la revendication 4, **caractérisé par le fait que** l'unité lève-vitre (10) comprend deux pièces d'entretoisement (103, 104).

6. Module d'encadrement structurel selon l'une des revendications précédentes, **caractérisé par le fait que** ladite au moins une pièce d'entretoisement (103, 104) est fabriquée en
- une tôle métallique, notamment une tôle métallique spatialement structurée,
- une pièce venue de coulée en métal léger, notamment produite par coulée continue, extrusion ou pultrusion, ou
- une matière plastique renforcée par des fibres, notamment une matière plastique armée de fibres de verre.

7. Module d'encadrement structurel selon l'une des revendications précédentes, **caractérisé par le fait que** ladite au moins une pièce d'entretoisement (103, 104) matérialise un groupe structurel hybride métal-matière plastique en association avec une platine de support (102) de l'unité lève-vitre (10), à étendue aplatie, ladite platine de support (102) étant fabriquée en une matière plastique, et au moins une glissière de guidage (109, 110) de ladite unité lève-vitre (10) étant ménagée sur ladite platine de support (102).

8. Module d'encadrement structurel selon l'une des revendications précédentes, **caractérisé par le fait que** ladite au moins une pièce d'entretoisement (103, 104) est réalisée sous la forme d'un profilé creux de section transversale substantiellement configurée en U, doté de nervures de rigidification (118) en vue d'accroître la stabilité.

9. Module d'encadrement structurel selon l'une des revendications précédentes, **caractérisé par le fait que** ladite au moins une pièce d'entretoisement (103, 104) est rattachée rigidement ou avec faculté de déplacement dans la direction transversale (Y) du véhicule, directement ou indirectement par l'intermédiaire de l'unité lève-vitre (10), à une entretoise de rambardage (111) et à un support (112) d'impacts latéraux qui matérialisent, respectivement, une entretoise transversale du cadre structurel (11).

10. Module d'encadrement structurel selon l'une des revendications précédentes, **caractérisé par le fait que** ladite au moins une pièce d'entretoisement (103, 104) est pourvue d'au moins un bras (105, 106) bifurquant de ladite au moins une pièce d'entretoisement (103, 104) à présence minimale, ledit bras (105, 106), à présence minimale, comportant une extrémité libre (105A, 106A) sur laquelle se trouve une zone d'appui ou de rattachement (105B, 106B) dédiée à l'habillage intérieur (2) de la porte.

11. Module d'encadrement structurel selon la revendication 10, **caractérisé par le fait que** l'extrémité libre (105A, 106A) dudit au moins un bras (105, 106) est reliée, par l'intermédiaire d'une membrure transversale (107, 108), à l'extrémité libre (103A, 104A) de ladite au moins une pièce d'entretoisement (103, 104).

12. Module d'encadrement structurel selon la revendication 11, **caractérisé par le fait que** la membrure transversale (107, 108) est façonnée d'un seul tenant avec le bras (105, 106) et la pièce d'entretoisement (103, 104), et est fabriquée en métal ou en matière plastique, notamment une matière plastique armée de fibres de verre.

13. Module d'encadrement structurel selon l'une des revendications précédentes, **caractérisé par le fait que** des moyens, affectés au réglage de l'habillage intérieur (2) de la porte dans la direction transversale (Y) du véhicule, sont disposés dans la zone d'appui ou de rattachement (103B, 104B) de ladite au moins une pièce d'entretoisement (103, 104).

14. Module d'encadrement structurel selon l'une des revendications précédentes, **caractérisé par le fait que** l'unité lève-vitre (10) matérialise un support de module, ou fait partie intégrante d'un module portant au moins l'une des pièces structurelles énoncées ci-après :
- un dispositif d'entraînement (101) dédié à l'unité lève-vitre (10),
- des éléments de renvoi dédiés à un moyen de traction de ladite unité lève-vitre (10),
- un carter d'entraînement par câble métallique,
- un attache-câblage,
- une interface dévolue à une poignée de fermeture de porte,
- un haut-parleur,
- un élément de retenue de serrure et/ou
- des zones d'appui ou de rattachement dédiées à un panneau extérieur de la porte.

15. Module d'encadrement structurel selon l'une des revendications précédentes, **caractérisé par le fait que** l'unité lève-vitre (10) est réalisée sous la forme d'un lève-vitre occupant une position extérieure, de telle sorte qu'une vitre (30), devant être déplacée par ladite unité lève-vitre (10), soit guidée sur un côté de ladite unité lève-vitre (10) qui est tourné vers un habitacle de véhicule.
